## Europäisches Patentamt
## European Patent Office
## Office européen des brevets

(19)

(11) Veröffentlichungsnummer: **0 148 397 B1**

(12)

# EUROPÄISCHE PATENTSCHRIFT

(45) Veröffentlichungstag der Patentschrift:
**05.10.88**

(21) Anmeldenummer: **84114493.4**

(22) Anmeldetag: **29.11.84**

(51) Int. Cl.⁴: **C 08 L 29/14, C 08 K 5/00, C 08 K 5/13, C 08 K 5/52, C 08 K 5/53, B 32 B 17/10, C 08 J 5/18**

(54) **Verfahren zur Herstellung von lichtbeständigen Polyvinylbutyral-Folien.**

(30) Priorität: **24.12.83 DE 3347040**

(43) Veröffentlichungstag der Anmeldung:
**17.07.85 Patentblatt 85/29**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**EP - A - 0 102 502**
**DE - A - 2 208 167**
**FR - A - 2 340 343**
**US - A - 3 823 113**

(73) Patentinhaber: **Hüls Troisdorf Aktiengesellschaft, Postfach 11 65, D-5210 Troisdorf (DE)**

(72) Erfinder: **Beckman, Rolf, Dr., Seehofstrasse 100, D-5200 Siegburg (DE)**

**Beschreibung**

Die vorliegende Erfindung betrifft weichmacherhaltige Folien aus teilacetalisierten Polyvinylalkoholen, die als Klebefolie in Verbundsicherheitsgläsern eingesetzt werden. Insbesondere betrifft die Erfindung die Herstellung neuer Polyvinylbutyralfolien und die Verwendung dieser Folien zur Herstellung von Verbundsicherheitsgläsern.

Verbundsicherheitsgläser bestehen im allgemeinen aus zwei Silikatglasscheiben und einer die Glasscheiben verbindenden Klebefolie. Gegebenenfalls kann eine der Silikatglasscheiben durch eine Kunststoffscheibe ersetzt werden. Solche Verbundsicherheitsscheiben werden hauptsächlich als Windschutzscheiben in Fahrzeugen eingesetzt; sie können jedoch auch im Bausektor verwendet werden, wobei, je nach ihrer Verwendung, auch mehr als zwei Silikat- oder Kunststoffscheiben durch Klebefolien verbunden werden. Solche Mehrfachverbunde dienen z.B. als Verbundpanzergläser. Die Verbundsicherheitsgläser werden durch Verpressen der Folien und der Glasscheiben bis 5 bis 20 kp/cm$^2$ und 125 bis 155 °C in der Presse oder sehr bevorzugt in einem Autoklaven hergestellt.

Als Klebefolien in Verbundgläsern dienen hauptsächlich weichgemachte teilacetalisierte Polyvinylalkoholfolien. Die für ihr Herstellung notwendigen teilacetalisierten Polyvinylalkohole werden hergestellt durch Verseifung von Polyvinylacetat und anschliessender Acetalisierung mit aliphatischen Aldehyden mit 3 bis 10 C-Atomen wie besonders Formaldehyd, Acetaldehyd, Butyraldehyd. Die Verseifung ist im allgemeinen nicht vollständig durchgeführt, so dass die Polyvinylalkohole meist noch 0,5 bis 5 Gew.-% Acetalgruppen, berechnet als Vinylacetatgruppen, enthalten. Auch die Acetalisierung wird im allgemeinen nicht vollständig durchgeführt, so dass der für die Herstellung der Folien eingesetzte teilacetalisierte Polyvinylalkohol meist noch freie OH-Gruppen enthält; beim teilbutyralisierten Polyvinylalkohol (im folgenden mit PVB bezeichnet) kann dieser OH-Gehalt zwischen 10 und 27 Gew.-% berechnet als Vinylalkohol, betragen. Der Begriff teilacetalisierte Polyvinylalkohole wird im folgenden, wie üblich, sowohl für teilacetylisierten wie auch für teilbutyralisierten Polyvinylalkohol benutzt.

Bei der Herstellung von Verbundsicherheitsgläsern werden diese teilacetalisierten Polyvinylalkohole mit einem bestimmten Weichmachergehalt als Folien eingesetzt. Die Art und Menge des eingesetzten Weichmachers beeinflussen die Eigenschaften des Verbundsicherheitsglases. In der Praxis hat sich deshalb herausgestellt, dass ein besonders splittersicheres Verbundsicherheitsglas als Zwischenfolie eine PVB-Folie haben soll, die einen Weichmachergehalt von 15 bis 40 Gew.-%, vorzugsweise 25 bis 31 Gew.-% besitzt und deren Gehalt an freien OH-Gruppen 10 bis 25 Gew.-%, vorzugsweise 16 bis 23 Gew.-%, bezogen auf weichmacherfreies PVB-Harz, beträgt.

Der Feuchtigkeitsgehalt einer solchen PVB-Folie soll zwischen 0,2 und 0,9 Gew.-% liegen.

Die Erfindung betrifft besonders Folien aus weichgemachten, teilacetalisierten Polyvinylalkoholen mit guter Oxidations- und Temperaturbeständigkeit und hervorragender Lichtbeständigkeit. Weichmacherhaltiges Polyvinylbutyral wird unter den Bedingungen seiner Verarbeitung zu Folien und der nachfolgenden Verarbeitung zu Verbundglas hohen Temperaturen ausgesetzt, die in gewissem Umfang zu Vergilbung führen. Dadurch verschlechtern sich insbesondere die optischen Eigenschaften.

Es ist bekannt, dass zur Stabilisierung der Masse phenolische Verbindungen, wie 2,6-di-tert.-butyl-p-Kresol, 2,4,6-Trimethylphenol, Octylphenol, Bornyl-Xylenol u.a. verwendet werden (DE-PS 2 208 167). Es ist ferner bekannt, dass zur Vermeidung von Vergilbungen Phosphorigsäuretriester wie Trilaurylphosphit, Decylphenylphosphit u.a. verwendet werden (DE-PS 2 208 167).

Im Gegensatz zu Weich-PVC-Formulierungen, bei denen durch Einsatz von Phosphorigsäuretriestern als Costabilisatoren die Anfangsfarbe, Transparenz und Lichtstabilität verbessert wird, hat sich jedoch gezeigt, dass Phosphorigsäuretriester enthaltende PVB-Folien nach längeren Belichtungsperioden ihre ursprünglich helle Farbe verlieren und in nicht vertretbarem Masse gelber werden. Insbesondere bei den in jüngster Zeit von den Verbrauchern geforderten wasserhellen Sicherheitsglasfolien war es die Aufgabe der vorliegenden Erfindung, einen Weg zu finden, die Langzeitlichtbeständigkeit zu verbessern und die im Laufe der Zeit zunehmende Vergilbung zu verhindern.

Vergilbungen durch Langzeitbelichtung wurden bei Verwendung einer Reihe von Phosphorigsäuretriestern oder Phosphonigsäurediestern wie, z.B. Decyl-diphenyl-phosphit, Trilaurylphosphit, Didecyl-phenyl-phosphit, Tris-nonylphenylphosphit, Triphenylphosphit, Tris(2,4-di-tert.butylphenyl) phosphit, Di-(isodecyl)-pentaerythrit-diphosphit, Di-stearylpentaerythrit-diphosphit, Tetrakis-(2,4-di-tert.butylphenyl)-4,4'-biphenylylendiphosphonit beobachtet.

Es bestand daher die Aufgabe, die Polyvinylbutyral-Folien, d.h. PVB-Folien in Verbund-Sicherheitsglas mit Gehalten der genannten phenolischen Verbindungen und Stabilisatoren auf Basis von Phosphorigsäure-triestern und/oder Phosphonigsäure-diestern durch zusätzliche Massnahmen gegen den Einfluss des Tageslichts zu stabilisieren, nämlich entsprechend der langjährigen Benutzungsdauer von Verbund-Sicherheitsscheiben mit darin enthaltenen PVB-Folien, einen Alterungsschutz mit ausgeprägter Langzeitwirkung gegen Vergilbung zu erreichen.

Überraschend wurde nun gefunden, dass eine Langzeitwirkung gegen die Vergilbung phosphithaltiger Folienformulierungen durch die Zugabe von ausgewählten UV-Absorbern erzielt wird und die durch den notwendigen Zusatz der Phosphite bzw. Phosphonite erfolgende Vergilbung auch bei langer Einwirkung von Licht verhindert wird.

Aus der EP-A0 102 502 und der US-A3,823,113 ist beispielsweise der Zusatz von Benztriazolen zu Polyvinylbutyralfolie bekannt, jedoch dienen diese Stoffe dort als Lichtstabilisatoren. Die durch Phosphite bei langem Gebrauch auftretende Vergilbung und deren Beseitigung ist dort nicht angesprochen.

Gegenstand der Erfindung ist daher ein Verfahren zur Verwendung von
a) Derivaten des Benzotriazols,
b) Derivaten des Acrylnitrils bzw. des Zimtsäurenitrils oder
c) der Hydroxybenzophenone
als Alterungsschutzmittel mit ausgeprägter Langzeitwirkung gegen Vergilbung durch Einfluss des Tageslichts in Folien aus phenolisch stabilisierten, weichgemachten, teilacetalisierten Polyvinylalkoholen mit Gehalten von Phosphorigsäure-triestern bzw. Phosphonigsäure-diestern.

Weiterer Gegenstand der Erfindung ist ein Verfahren zum Alterungsschutz von Folien aus phenolisch stabilisierten, weichgemachten, teilacetalisierten Polyvinylalkoholen mit Gehalten von Phosphorigsäure-triestern bzw. Phosphonigsäure-diestern, dadurch gekennzeichnet, dass als Alterungsschutz mit ausgeprägter Langzeitwirkung gegen Vergilbung durch Einfluss des Tageslichts
a) Derivate des Benzotriazols,
b) Derivate des Acrylnitrils bzw. des Zimtsäurenitrils oder
c) der Hydroxybenzophenone
zugesetzt werden.

Überraschend bewirken ausgewählte UV-Absorber den geforderten Alterungsschutz und die Langzeitwirkung gegen die Vergilbung gemäss der Aufgabe. Andere Gruppen von üblichen UV-Absorbern hingegen versagen.

Beispielsweise ergeben die als UV-Absorber bekannten Phenylsalicylate und deren Derivate, wie Phenylsalicylat, 4-tert. Butylphenylsalicylat oder 4-Octylphenylsalicylat, und die ebenfalls als Lichtschutzmittel wirkenden sterisch gehinderten Amine, wie z.B. Sebazinsäure-bis-2,2,6,6-tetramethyl-4-piperidylester, nicht die genannte Langzeitwirkung und zeigen zu hohe Messwerte E bzw. YI im Langzeitversuch.

Als UV-Absorber sind solche geeignet, die u.a. folgenden Stoffklassen zuzuordnen sind:
1. Derivate des Benzotriazols besonders Hydroxyphenylbenzotriazole wie:
2-(2'-Hydroxy-5'-methylphenyl-)benzotriazol, 2-(2'-Hydroxy-3', 5'-di-tert.butylphenyl)-5-chlorbenzotriazol, 2-(2'-Hydroxy-3',5'-di-tert.butylphenyl)-benzotriazol, 2-(2'-Hydroxy-3'-tert.butyl-5-methylphenyl-5-chlorbenzotriazol, 2-(2'-Hydroxy-3',5'-di-tert.amylphenyl)-benzotriazol, 2-(2'-Hydroxy-5'-tert.octylphenyl)-benzotriazol.
2. Derivate des Acrylnitrils bzw. des Zimtsäurenitrils z.B. α-Cyan-β,β-diphenylacrylsäureäthyl-

ester, α-Cyan-β-methyl-4-methoxyzimtsäuremethylester.
3. Hydroxybenzophenone wie:
2,2'-Dihydroxy-4-methoxy-benzophenon, 2-Hydroxy-4-n-octyloxy-benzophenon, 2-Hydroxy-5-chlor-benzophenon, 2,2',4,4'-Tetrahydroxybenzophenon.

Gemische solcher UV-Absorber aus denselben oder verschiedenen Stoffklassen sind möglich.

Vorteilhaft ist die Verwendung solcher UV-Absorber, die keine Eigenfarbe besitzen oder deren Eigenfarbe gering ist bzw. die keine Verfärbung der Folienmasse bewirken, z.B. 2-(2'-Hydroxy-5'-methylphenyl-)benzotriazol oder α-Cyan-β,β-diphenylacrylsäureäthylester.

Es reicht vielfach aus, sich auf Zugabemengen der UV-Absorber von 0,1 bis 0,2 Gew.-% zu beschränken. Im allgemeinen ergolgt eine Verwendung von 0,01 bis 0,40 Gew.-%, vorzugsweise von 0,03 bis 0,30 Gew.-%.

Die Langzeitwirkung der zugesetzten UV-Absorber wurde in Belichtungsversuchen an Verbundgläsern aus einer 0,8 mm PVB-Folie zwischen zwei 2,8 mm Glasscheiben im Rotationssolarium nach dem deutschen Gebrauchsmuster 78 19 931 in Abständen von jeweils 1 Woche bis zu insgesamt 20 Wochen gemessen. Zur Beurteilung wird die Gesamtfarbabweichung ΔE nach DIN 6174 oder der Yellowness Index (YI) nach ASTM-D-1925 bestimmt.

In den nachfolgenden Beispielen werden aus Gründen der Vergleichbarkeit dieselbe Grundrezeptur der PVB-Folie und die obengenannte Dicke eines Verbundglases gewählt, jedoch werden gleichartige Verminderungen der Messwerte durch den erfindungsgemässen Zusatz der UV-Absorber bei weiteren PVB-Rezepturen erzielt.

Beispiele
Eine für die Herstellung von Fahrzeuggscheiben geeignete PVB-Folie von 0,8 mm Dicke wurde auf Basis einer Grundrezeptur aus 70 Gew.-% teilbutyralisiertem Polyvinylalkohol mit 20 Gew.-% Polyvinylalkohol-Gehalt, 30 Gew.-% Triäthylenglykolester der 2-Äthylbuttersäure als Weichmacher und 0,3 Gew.-% Bornyl-Xylerol als phenolischer Stabilisator sowie in den Vergleichsbeispielen 2 bis 6 mit einem Phosphit bzw. Phosphonit als Additiv versetzt und darauf zur Folie verarbeitet.

Vergleichsbeispiel 1 bis 6
Der genannten Grundrezeptur der PVB-Folie wurde folgende Stabilisatoren als Additive zugesetzt:
a = Decyl-diphenyl-phosphit
b = Tris(2,4-di-tert.-butylphenyl)phosphit
c = Trisnonylphenylphosphit
d = Di-Stearyl-pentaerythrit-diphosphit
e = Tetrakis(2,4-di-tert.butylphenyl)-4,4'-bisphenylylendiphosphonit

| | Gew.-% Additiv | Gesamtfarb-abweichung $\Delta E$ gegenüber Standard nach der | | | Yellowness-Index nach der | | |
|---|---|---|---|---|---|---|---|
| | | 1. Wo. | 10. Wo. | 20. Wo. | 1. Wo. | 10. Wo. | 20. Wo. |
| 1 | keine | 0,73 | 0,31 | 1,79 | 1,17 | 1,76 | 2,79 |
| 2 | 0,1 a | 0,81 | 1,84 | 4,52 | 0,72 | 2,76 | 4,73 |
| 3 | 0,1 b | 0,91 | 1,06 | 3,53 | 0,99 | 2,57 | 4,20 |
| 4 | 0,1 c | 0,77 | 1,72 | 4,44 | 0,90 | 2,77 | 4,62 |
| 5 | 0,1 d | 1,07 | 1,58 | 4,22 | 0,77 | 2,40 | 4,37 |
| 6 | 0,1 e | 0,67 | 1,08 | 3,24 | 0,90 | 2,14 | 3,69 |

Der Zusatz von Phosphiten bzw. Phosphoniten bewirkt im Langzeitversuch erhöhte Farbwerte, welche auch vom menschlichen Auge als gelbliche Färbung wahrgenommen werden.

Beispiele 7 bis 11

In die Grundrezeptur der PVB-Folie, versehen mit den Additiven nach den Vergleichsbeispielen 2 bis 6, wurden zusätzlich als UV-Absorber 2-(2'-Hydroxy-5'-methylphenyl)-benzotriazol(m) erfindungsgemäss zugegeben:

| | Gew.-% Additiv | Gew.-% UV-Absor-ber m | Gesamtfarbabweichung $\Delta E$ gegenüber Standard nach der | | | Yellowness-Index nach der | | |
|---|---|---|---|---|---|---|---|---|
| | | | 1. Wo. | 10. Wo. | 20. Wo. | 1. Wo. | 10. Wo. | 20. Wo. |
| 7 | 0,1 a | 0,1 | 0,66 | 0,45 | 0,84 | 0,89 | 1,09 | 1,24 |
| 8 | 0,1 b | 0,1 | 0,63 | 0,91 | 0,86 | 1,49 | 1,32 | 1,09 |
| 9 | 0,1 c | 0,1 | 1,04 | 0,82 | 0,95 | 1,35 | 1,57 | 1,65 |
| 10 | 0,1 d | 0,1 | 0,63 | 0,53 | 0,56 | 0,94 | 1,22 | 1,35 |
| 11 | 0,1 e | 0,1 | 0,60 | 0,72 | 0,98 | 1,16 | 1,09 | 1,14 |

Die Messwerte des Langzeitversuchs zeigen wesentlich geringere Farbwerte gegenüber den zugehörigen Vergleichsbeispielen 2 bis 6. Mit dem Auge ist praktisch keine gelbliche Färbung erkennbar.

Beispiele 12 bis 14

In die Grundrezeptur der PVB-Folie, versehen mit dem Additiv des Vergleichsbeispiels 2 wurden zusätzlich die unten genannten UV-Absorber erfindungsgemäss zugegeben:

n = 2-(2'-Hydroxy-3'-5'-di-tert.-butylphenyl)-5-chlorbenzotriazol

o = 2-Hydroxy-4-n-octyloxy-benzophenon

p = α-Cyan-β,β-diphenylacrylsäureäthylester

| | Gew.-% Additiv | Gew.-% UV-Absor-ber m | Gesamtfarbabweichung $\Delta E$ gegenüber Standard nach der | | | Yellowness-Index nach der | | |
|---|---|---|---|---|---|---|---|---|
| | | | 1. Wo. | 10. Wo. | 20. Wo. | 1. Wo. | 10. Wo. | 20. Wo. |
| 12 | 0,1 a | 0,1 n | 0,69 | 1,04 | 2,59 | 1,06 | 1,87 | 3,29 |
| 13 | 0,1 a | 0,1 o | 1,01 | 0,59 | 0,63 | 0,78 | 1,14 | 1,56 |
| 14 | 0,1 a | 0,1 p | 0,90 | 0,86 | 2,36 | 0,94 | 1,82 | 2,80 |

Die Messwerte im Langzeitversuch zeigen auch für die UV-Absorber n aus der Gruppe der Benzotriazole, o aus der Gruppe der Benzophenone und p aus der Gruppe der Cyan-Acrylate verminderte Messwerte gegenüber Vergleichsbeispiel 2 und sehr geringe gelbliche Färbung bei Betrachtung mit dem Auge.

Gegenbeispiele 15 und 16

Entsprechend den vorangehenden Beispielen wird der Stoff q aus der Gruppe der Salizylate und r aus der Gruppe der Piperidylester von Dicarbonsäuren eingearbeitet, die jedoch versagen.

q = Phenylsalicylat

r = Sebazinsäure-bis-2,2,6,6-tetramethyl-4-piperidylester

| Gew.-% Additiv | Gew.-% UV-Absorber m | Gesamtfarbabweichung Δ E gegenüber Standard nach der | | | Yellowness-Index nach der | | |
|---|---|---|---|---|---|---|---|
| | | 1. Wo. | 10. Wo. | 20. Wo. | 1. Wo. | 10. Wo. | 20. Wo. |
| 15   0,1 a | 0,1 q | 0,69 | 4,05 | 6,94 | 1,08 | 4,96 | 7,03 |
| 16   0,1 a | 0,1 r | 0,42 | 1,38 | 3,56 | 1,33 | 3,04 | 5,42 |

Die Ergebnisse des Langzeitversuchs zeigen Unbrauchbarkeit der Stoffe q und r an, während bei kurzer Versuchsdauer Nachteile nicht erkennbar sind. Mit dem Auge ist nach dem Langzeitversuch gelbe Färbung erkennbar.

**Beispiele 17 bis 34**

In die Grundrezeptur, versehen mit dem Additiv des Vergleichsbeispiels 2, werden die UV-Absorber m, o und p in den unten genannten Mengen zugegeben:

| Gew.-% Additiv | Gew.-% UV-Absorber m | Gesamtfarbabweichung Δ E gegenüber Standard nach der | | | Yellowness-Index nach der | | |
|---|---|---|---|---|---|---|---|
| | | 1. Wo. | 10. Wo. | 20. Wo. | 1. Wo. | 10. Wo. | 20. Wo. |
| 17   0,1 a | 0,01 m | 0,77 | 2,27 | 5,34 | 0,89 | 3,16 | 5,63 |
| 0,1 a | 0,03 m | 0,73 | 1,44 | 4,50 | 0,88 | 2,65 | 4,91 |
| 0,1 a | 0,05 m | 0,96 | 0,56 | 2,35 | 0,85 | 1,69 | 3,25 |
| 0,1 a | 0,07 m | 0,66 | 0,50 | 2,02 | 0,84 | 1,41 | 2,74 |
| 0,1 a | 0,10 m | 0,66 | 0,45 | 0,84 | 0,89 | 1,09 | 1,24 |
| 22   0,1 a | 0,20 m | 1,29 | 0,97 | 0,86 | 1,18 | 1,04 | 0,87 |
| 23   0,1 a | 0,01 o | 0,58 | 1,36 | 4,89 | 0,68 | 2,06 | 4,96 |
| 0,1 a | 0,03 o | 0,66 | 0,74 | 3,42 | 0,86 | 1,42 | 3,32 |
| 0,1 a | 0,05 o | 0,90 | 0,56 | 2,66 | 0,90 | 1,39 | 3,05 |
| 0,1 a | 0,07 o | 1,14 | 0,53 | 1,55 | 0,88 | 1,28 | 2,39 |
| 0,1 a | 0,10 o | 1,01 | 0,59 | 0,63 | 0,78 | 1,14 | 1,56 |
| 28   0,1 a | 0,20 o | 1,09 | 0,60 | 0,60 | 0,96 | 1,22 | 1,38 |
| 29   0,1 a | 0,01 p | 0,75 | 0,84 | 4,51 | 1,40 | 1,90 | 4,47 |
| 0,1 a | 0,03 p | 0,91 | 1,65 | 6,70 | 0,81 | 2,90 | 6,74 |
| 0,1 a | 0,05 p | 0,61 | 1,03 | 4,92 | 1,03 | 2,32 | 5,08 |
| 0,1 a | 0,07 p | 0,65 | 1,14 | 3,66 | 0,97 | 2,18 | 3,83 |
| 0,1 a | 0,10 p | 0,90 | 0,86 | 2,36 | 0,94 | 1,82 | 2,80 |
| 34   0,1 a | 0,20 p | 0,53 | 0,55 | 1,64 | 1,16 | 2,15 | 2,53 |

Im Langzeitversuch sind bei Zusatzmengen von 0,01 bis 0,03 Gew.-% Verbesserungen der Farbwerte erkennbar. Zusatzmengen zwischen 0,1 bis 0,2 Gew.-% bewirken sehr niedrige Farbwerte für besondere Beanspruchung bzw. besonders lange Einsatzdauer.

**Patentansprüche**

1. Verwendung von
a) Derivaten des Benzotriazols,
b) Derivaten des Acrylnitrils bzw. des Zimtsäurenitrils oder
c) der Hydroxybenzophenone
als Alterungsschutzmittel mit ausgeprägter Langzeitwirkung wegen Vergilbung durch Einfluss des Tageslichts in Folien aus phenolisch stabilisierten, weichgemachten, teilacetalisierten Polyvinylalkoholen mit Gehalten von Phosphorigsäure-triestern bzw. Phosphonigsäure-diestern.

2. Verwendung nach Anspruch 1, dadurch gekennzeichnet, dass die Alterungsschutzmittel a) bis c) in Mengen von 0,01 bis 0,40 Gew.-% der Folie zugesetzt werden.

3. Verfahren zum Alterungsschutz von Folien aus phenolisch stabilisierten, weichgemachten, teilacetalisierten Polyvinylalkoholen mit Gehalten von Phosphorigsäure-triestern bzw. Phosphonigsäure-diestern, dadurch gekennzeichnet, dass als Alterungsschutz mit ausgeprägter Langzeitwirkung gegen Vergilbung durch Einfluss des Tageslichts

a) Derivate des Benzotriazols,
b) Derivate des Acrylnitrils bzw. des Zimtsäurenitrils oder
c) der Hydroxybenzophenone
zugesetzt werden.

4. Verfahren nach Anspruch 3, dadurch gekennzeichnet, dass die Alterungsschutzmittel a) bis c) in Mengen von 0,01 bis 0,40 Gew.-% den Folien zugesetzt sind.

5. Verwendung von Folien nach den vorangehenden Ansprüchen als Bestandteil von Verbundglas.

## Claims

1. Use of
a) derivatives of benzotriazole,
b) derivatives of acrylonitrile or of cinnamonitrile or
c) hydroxybenzophenones
as stabilisers with pronounced long-term effect against yellowing under the influence of daylight in foils of phenolically stabilised, plasticised, partially acetalised polyvinyl alcohols with contents of phosphoric acid triesters or phosphonic acid diesters.

2. Use according to claim 1, characterised in that the stabilisers a) to c) are added to the foil in amounts of 0.01 to 0.40% by weitht.

3. Process for the stabilisation of foils of phenolically stabilised plasticised partially acetalised polyvinyl alcohols with contents of phosphoric acid triesters or of phosphonic acid diesters, characterised in that
a) derivatives of benzotriazole,
b) derivatives of acrylonitrile or of cinnamonitrile or
c) hydroxybenzophenones
are added as stabiliser with pronounced long-term effects against yellowing under the influence of daylight.

4. Process according to claim 3, characterised in that the stabilisers a) to c) are added in amounts of 0.01 to 0.40% by weight to the foils.

5. Use of foils according to the foregoing claims as constituent of laminated glass.

## Revendications

1. Utilisation
a) de dérivés du benzotriazole,
b) de dérivés de l'acrylonitrile, respectivement du cinnamonitrile ou
c) des hydroxybenzophénones
comme agents protecteurs contre le vieillissement avec un effet de longue durée marqué sur le jaunissement sous l'action de la lumière du jour dans des feuilles à base d'alcools polyvinyliques plastifiés, partiellement acétalisés, stabilisés par des composés phénoliques contenant des triesters d'acide phosphoreux ou des diesters d'acide phosphonique.

2. Utilisation selon la revendication 1, caractérisée en ce que les agents protecteurs contre le vieillessement a) à c) sont incorporés à la feuille à des doses de 0,01 à 0,40% en poids.

3. Procédé pour la protection contre le vieillissement de feuilles à base d'alcools polyvinyliques plastifiés, partiellement acétalisés, stabilisés par des composés phénoliques contenant des triesters d'acide phosphoreux ou des diesters d'acide phosphonique, caractérisé en ce qu'on incorpore comme agents protecteurs contre le vieillissement avec un effet de longue durée marqué sur le jaunissement sous l'action de la lumière du jour
a) des dérivés du benzotriazole,
b) des dérivés de l'acrylonitrile, respect. du cinnamonitrile ou
c) des hydroxybenzophénones.

4. Procédé selon la revendication 3, caractérisé en ce que les agents protecteurs contre le vieillissement a) à c) sont incorporés aux feuilles à des doses de 0,01 à 0,40% en poids.

5. Utilisation des feuilles selon les revendications précédentes comme élément constitutif d'un verre feuilleté.